# EUROPEAN PATENT APPLICATION

(11) **EP 4 293 296 A1**
(43) Date of publication of application: **20.12.2023**
(21) Application number: 22179087.6
(22) Date of filing: 15.06.2022
(51) Int. Cl.: F24S 10/70, F24S 25/20, F24S 40/60, F24S 70/20, F24S 80/00

(54) **NEW INTEGRAL FLAT -PANEL TYPE SOLAR WATER HEATER**

(71) Applicant: Zhejian Shentai Solar Energy Co., Ltd., Haining, Zhejiang (CN)
(72) Inventor: Yu, Haiqiang, Haining (CN)
(74) Representative: Cleanthous, Marinos

(57) **Abstract**

The invention discloses a new type integral type flat plate solar water heater, which comprises two side shells, a middle shell and a water tank mounted on the middle shell. The side shell and the middle shell correspond to each other and are clamped and fixed. The middle shell and the side shell are made of a new type of foam plastic material. The fixing surfaces of the side shell and the middle shell are provided with a plurality of vertically arranged snaps and slots with self-locking function, and the side shells are correspondingly provided with water outlet hole, sewage hole, reserved hole and inlet hole. All the holes are connected with the water pipes corresponding to the water tank. The integral type flat plate solar water heater of the invention has the advantages of convenient transportation, convenient installation, and is not easy to be broken, and the hot water heat preservation performance of the water tank is good.

## Description

### TECHNICAL FIELD

The invention relates to the technical field of solar water heaters, in particular to a new integral flat -panel type solar water heater.

### BACKGROUND TECHNIQUE

The novel integral flat -panel type solar water heater is a combination of a collector and a water tank, and the circulation and flow heating process of cold and hot water is carried out inside the water tank. After a day of natural circulation, the water is heated to service temperature. The advantages of the tankless solar water heater are that the structure is simple, the cost is low, and it is easy to popularize and use. However, the volume of conventional solar water heaters is often relatively large and generally consists of three parts: a water tank, a collector, and a bracket. At the same time, it is inconvenient for workers to carry, tedious to install, and easy to break. The shape is relatively large and does not coordinate with the building.

### SUMMARY OF THE INVENTION

The present invention aims to solve one of the technical problems in the related art at least to a certain extent. Therefore, an object of the present invention is to propose a novel integral flat-panel solar water heater, which is convenient to carry, easy to install, not easy to break, and has better thermal insulation performance of hot water in the water tank.

The technical scheme of the present invention is as follows:

A new type of integral flat-panel solar water heater, comprising a water tank with two side shells corresponding to a middle shell and being clamped and fixed, and mounted on the middle shell, the middle shell and the side shells are made of a new type of thermal insulation foam plastic material, and the side shells are integrally injection-molded. The fixing surfaces on the shell and the middle shell are integrally formed with a plurality of snaps and slots with self-locking functions arranged vertically and horizontally, and the corresponding side shells are provided with water outlet hole, drain out hole, reserved hole and the cold water inlet hole, the water outlet hole, the drain out hole, the reserved hole and the water inlet hole are all connected with the water pipe corresponding to the water tank.

Preferably, the side shell and the middle shell are made of EPP foam plastic, and the thickness is 50-60 mm.

Preferably, the clasp is integrally formed with the connecting rod and the semi-cylindrical body, and the width of the connecting rod is smaller than the diameter of the semi-cylindrical body, and the shape of the clasp corresponds to the clasp.

Preferably, the water tank is tubular, a groove is formed in the middle of the middle shell corresponding to the water tank, and adjacent water tanks are communicated with each other through a pipe, so that the water in the water tank circulates in a serpentine shape.

Preferably, a fastening ring is provided on the outer sides of both ends of the water tank, a fixed steel plate is pre-embedded in the middle shell corresponding to the fastening ring, and the fastening ring is fixed with the fixed steel plate by screws.

Preferably, the water tank is made of stainless steel tube material with heat-absorbing coating or an integrally formed black PE inner tank, which directly absorbs heat for storage.

Preferably, a panel fixing groove and a heat insulating plate fixing groove are opened on the middle shell, and corresponding notches are also opened on the side shells corresponding to the panel fixing groove and the heat insulating plate fixing groove, and the upper part of the water tank is provided with a heat insulation board. A heat insulation board is installed in the board fixing groove, and a panel is installed in the panel fixing groove above the heat insulation board.

Preferably, the panel is made of tempered glass, and the heat insulating board is a transparent honeycomb panel

Preferably, the water inlet holes and the water outlet holes are arranged diagonally to ensure the maximum flow of water in the water tank.

Preferably, the side shells are provided with fastening rings on the four water pipes.

The beneficial effects of the present invention are as follows: by using a new type of foamed plastic as the shell material, and the shell thickness reaches 50mm-60mm, the aesthetics and thermal insulation performance are greatly enhanced, and the cooling speed of the hot water of the water heater is greatly reduced when there is no sunlight, and the shell adopts EPP foam. Plastic, its heat-resistant temperature reaches -40°C-110°C, with good elasticity, shock resistance and compression resistance, high deformation recovery rate, good absorption performance, oil resistance, acid resistance, alkali resistance, various chemical solvents, non-absorbent, insulating, heat-resistant, non-toxic and odorless, 100% recyclable and almost no performance degradation, so while the weight is light, the anti-collision performance is better; by installing heat insulation boards on the middle shell and side shell, the front side of the heat is prevented from dissipating, and the tempered glass plate is installed on the surface to increase the surface strength, and play a double-layer heat insulation effect.

### DESCRIPTION OF DRAWINGS

The accompanying drawings are used to provide a further understanding of the present invention, and constitute a part of the specification, and are used to explain the present invention together with the embodiments of the present invention, and do not constitute a limitation to the present invention. In the attached image:
Fig. 1 is the appearance structure schematic diagram of the novel flat-panel sun-drying solar water heater proposed by the present invention;
Figure 2 is a schematic diagram of the internal structure of the novel flat-panel solar water heater of the present invention;
Fig. 3 is the structural schematic diagram of the buckle and the slot of the side shell and the middle shell integrally formed;
FIG. 4 is a schematic diagram (sectional view) of the structure of the installation and fixation of the water tank.

In the figure: 1-panel; 2-insulation board; 3-water tank; 31-fastening ring; 32-fixed steel plate; 4-middle shell; 41-panel fixing slot; 42-insulation board fixing slot; 5-side Shell; 6-water outlet; 7-sewage hole; 8-reserved hole; 9-water inlet.

### SPECIFIC EMBODIMENTS

The technical solutions in embodiments of the present invention will be clearly and completely described below in connection with the accompanying drawings in embodiments of the present invention, and it is clear that the embodiments described are only a portion of the embodiments of the present invention, and not all of them.

Examples of the described embodiments are shown in the accompanying drawings, wherein the same or similar designations from beginning to end indicate the same or similar components or components having the same or similar functions. The embodiments described below by reference to the accompanying drawings are exemplary and are intended to be used to explain the invention and are not to be construed as limiting the invention.

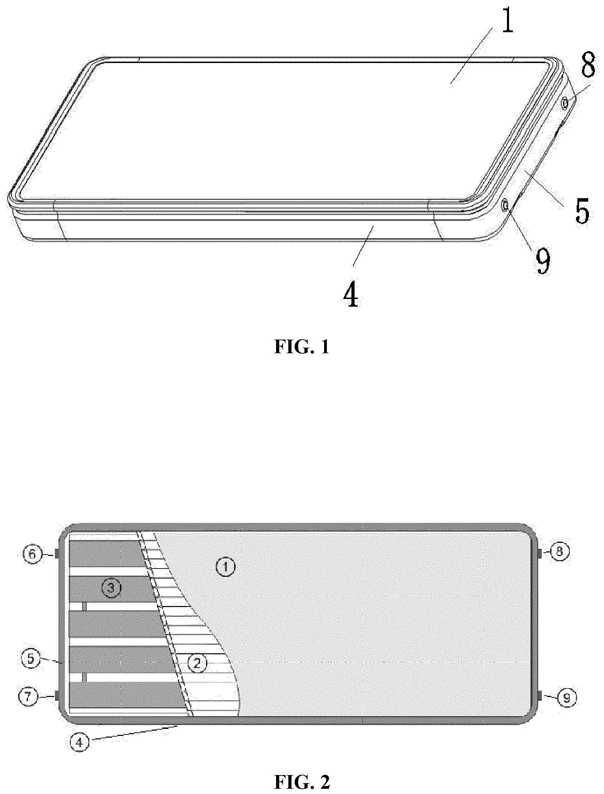

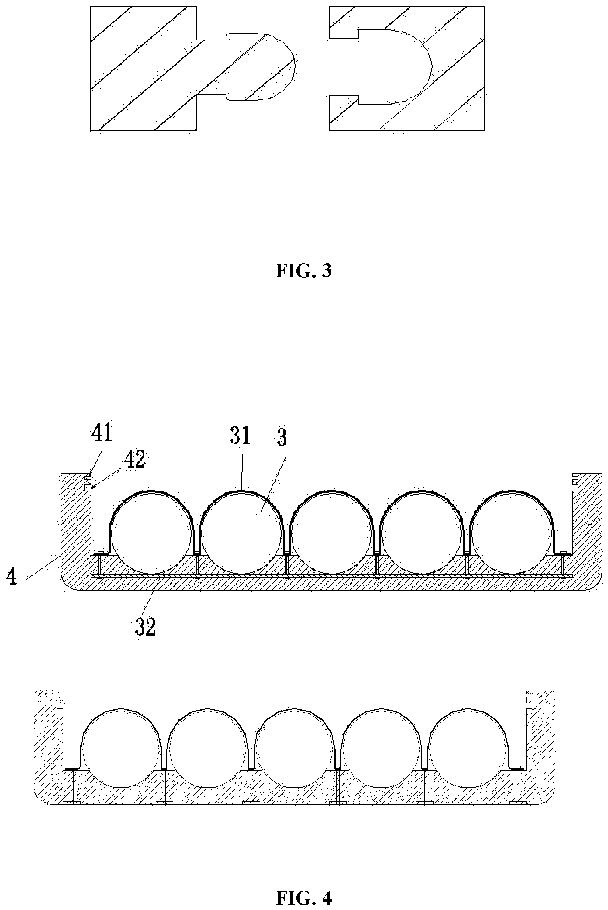

Referring to Figure 1, and Figure 2, a new type of integral type flat plate solar water heater, including two sides of the shell 5, and the side shell 5 corresponding to and snap fixed middle shell 4, mounted on the middle shell 4 tank 3, the middle shell 4 and side shell 5 are new foam material one-piece injection molding, in this implementation is EPP foam, as in Figure 3, side shell 5 and middle shell 4 on the fixed surface one-piece molding with a plurality of vertical and horizontal arrangement of Self-locking clasp and slot, this implementation of the clasp for the rod and half-cylinder integrated molding, and the width of the rod is less than the diameter of the half-cylinder, slot corresponding molding, because the EPP plastic has a certain degree of flexibility, so that when the clasp can be slightly deformed, the half-cylinder can be squeezed into the slot, and to achieve the clamping fixed;.

Referring to Figure 4, the tank 3 is tubular, the middle of the shell 4 corresponding to the opening of the arc-shaped groove for the placement of the tank, the tank 3 using stainless steel tube material or one PE reinforced plastic, and the outside of the tank 3 coated with heat-absorbing material (heat-absorbing material for conventional water heaters heat-absorbing material), adjacent tanks 3 connected through the receiver, so that the water in the tank 3 serpentine circulation; in the said tank 3 is set on the outside of the two ends of the fastening ring 31, corresponding to the fastening ring 31 in the shell 4 (one piece of molding) pre-buried a fixed steel plate 32, said fastening ring 31 and fixed steel plate 32 screw fixed, by pre-buried set fixed steel plate 32 that increases the strength of the shell 4, but also to avoid the disadvantages of the foam material is not easy to fix.

As in Figure 4, there are panel fixing slot 41 and heat insulation board fixing slot 42 on said middle shell 4, and side shell 5 has corresponding slots corresponding to panel fixing slot 41 and heat insulation board fixing slot 42, and there is heat insulation board 2 installed in heat insulation board fixing slot 42 above said water tank 3, and there is panel 1 installed in panel fixing slot 41 above said heat insulation board 2, where panel 1 is tempered glass material with high strength. The heat insulation board 2 is a transparent heat insulation board. When the panel 1 and heat insulation board 2 are fixed, the panel 1 and heat insulation board 2 are first inserted from the panel fixing slot 41 and heat insulation board fixing slot 42, and then the side shell 5 is fixed with the middle shell 4, and then the panel 1 and heat insulation board 2 can be fastened firmly from the slot in the middle shell 4 and the side shell 5.

Referring to Fig. 1 and Fig. 2, the two said side shells 5 are opened with corresponding water outlet holes 6, drainage holes 7, reserved holes 8 and water inlet holes 9, said water outlet holes 6, drainage holes 7, reserved holes 8 and water inlet holes 9 are connected with the water tank 3 corresponding to the water pipe, and the water tank 3 is connected with a threaded interface for the installation of valves and pipelines, where the water inlet holes 9 and water outlet holes 6 are set diagonally to ensure that the water in the water tank 3 has the maximum flow . In addition, the side shell 5 is installed with fastening rings on the said four water pipes to increase the tightness of the fixation.

In this application, the structure and connection relationship not described in detail are prior art, the structure and principle of which are already known technology, and will not be repeated here.

The above mentioned is only a better specific implementation of the present invention, but the scope of protection of the present invention is not limited to it. Any person skilled in the art who is familiar with the technical scope disclosed by the present invention and who substitutes or changes according to the technical solution of the present invention and its inventive idea shall be covered within the scope of protection of the present invention.

## Claims

1. A new type integral type flat-panel solar water heater, **characterized in that** it comprises a water tank with two side shells corresponding to the middle shell and being clamped and fixed, and installed on the middle shell, and the middle shell and the side shells are both new-type foam plastic materials. The fixing surfaces of the side shell and the middle shell are integrally formed with a plurality of vertically and horizontally arranged buckles and slots with self-locking function, and the corresponding side shells are provided with water outlet holes and sewage holes, reserved hole and inlet hole. All the holes are connected with the water pipes corresponding to the water tank.

2. The integral type flat-panel solar water heater as claimed in claim 1, **characterized in that**: the side shell and the middle shell are one-time molded EPP foam, and the thickness is 50-60mm.

3. The new integral type flat-panel solar water heater as claimed in claim 1 or 2, **characterized in that**: the buckle is integrally formed with the connecting rod and the semi-cylindrical body, and the width of the connecting rod is smaller than the diameter of the semi-cylindrical body. The shape of the card slot corresponds to the buckle.

4. The new integral type flat-panel solar water heater according to claim 1 or 2, **characterized in that** the water tank is in a tubular shape, a groove is formed in the middle of the middle shell corresponding to the water tank, and the adjacent water tanks are communicated through a pipe, so that the water in the tank circulates like a snake.

5. The new integral type flat-panel solar water heater as claimed in claim 1 or 2, **characterized in that**: fastening rings are arranged on the outer sides of both ends of the water tank, and a fixing ring is pre-buried in the middle shell corresponding to the fastening rings. Steel plate, the fastening ring is fixed with the fixing steel plate screw.

6. The new integral flat-panel solar water heater according to claim 1 or 2, **characterized in that**: the inner tank of the water tank adopts a combination of multiple stainless steel pipes or an integrated PE reinforced plastic inner tank, and the outer side of the water tank is coated with a heat-absorbing material.

7. According to the claim 1 or 2 described novel new integral flat -panel type solar water heater, it is **characterized in that**, the middle shell is provided with a panel fixing groove and a heat insulation board fixing groove, and the side shells correspond to the panel fixing groove and the heat insulation board fixing groove. The plate fixing groove is also provided with a corresponding notch, a heat-insulating plate is installed in the heat insulating plate fixing groove above the water tank, and a panel is installed in the panel fixing groove above the heat insulating plate.

8. According to the described novel new integral flat -panel type solar water heater of claim 7, it is **characterized in that**, the panel is made of tempered glass, and the heat insulation panel is made of transparent honeycomb panel.

9. According to the claim 1 or 2 described novel new integral flat -panel type solar water heater, it is **characterized in that**, the water inlet holes and the water outlet holes are arranged diagonally to ensure the maximum flow of water in the water tank.

10. According to the claim 1 or 2 described novel new integral flat -panel type solar water heater, it is **characterized in that**, the side shells are provided with fastening rings on the four water pipes.
